# EUROPEAN PATENT APPLICATION

(11) **EP 3 422 278 A1**
(43) Date of publication of application: **02.01.2019**
(21) Application number: 17193027.4
(22) Date of filing: 25.09.2017
(51) Int. Cl.: G06Q 30/06

(54) **COMMERCIAL PRODUCT SIZE DETERMINATION DEVICE AND COMMERCIAL PRODUCT SIZE DETERMINATION METHOD**

(30) Priority: 29.06.2017 US 201762526702 P
(71) Applicant: MTG Co., Ltd., Nagoya Aichi 453-0041 (JP)
(72) Inventor: McLear, John, Bradford, Yorkshire BD15 9AD (GB); Mallick, Satya, San Diego, CA 92130 (US); Mishra, Pranav, San Diego, CA 92130 (US)
(74) Representative: Jarrett, Daniel Phillip

(57) **Abstract**

An image acquisition unit (10) that acquires a photographic image showing a hand on which a card of a known size is placed. A card detection unit (20) detects a size of the card in the photographic image. A finger joint measurement unit (34) measures a size of the joint of the finger for the ring in the photographic image. A finger size estimation unit (40) estimates an actual size of the joint of the finger for the ring from a measured value of the size of the joint of the finger of the ring in the photographic image, based on a ratio between the known size of the card and the size of the card in the photographic image detected. A ring size determination unit (50) determines a size of the ring based on an estimated actual size of the joint of the finger for the ring.

## Description

The present invention relates to a technology of determining the size of a commercial product.

An IC card that approaches a reader and writer transmits and receives various data by wireless communication. An IC card is easy to use and is extensively used for entry and exit management cards, corporate employee cards, boarding cards for public transportation, credit cards, etc.

Rings provided with a function similar to that of IC cards are also known. By using a ring with a built-in RFID disclosed in patent document 1, a user can go through an automatic ticket gate of a railway or pay for shopping without taking out an IC card from a bag or a pocket of the user's clothes.

[patent document 1] JP2015-93004

Users normally try a ring on at a shop before purchasing the ring and so can buy a ring of a size most suitable for themselves. In the case of ring-type wearable terminals, however, users often purchase a terminal on the Internet or through mail order via media such as magazines. Unless the user know the size of the finger, the user cannot select the most suitable size of a ring-type wearable terminal and place and order. If the user ends up buying something not suited to the user's finger, a complicated procedure including returning the product etc. will be necessary. As a result, both the consumer and the seller have to pay the cost that is wasted.

Similarly, users purchasing commercial products worn on the body such as shoes, clothes, hats on the Internet or through mail order cannot try the product on. It is therefore difficult to select a size most suitable for the user's body.

In this background, a general purpose of the present invention is to provide a technology of determining a size of a commercial product worn on the user's body.

To address the issue, the commercial product size determination device according to an embodiment of the present invention comprises: an image acquisition unit that acquires a photographic image showing a commercial product of a known size and a body portion that should wear the commercial product; a detection unit that detects a size of the product in the photographic image; a measurement unit that measures a size of the body portion in the photographic image; and an estimation unit that estimates an actual size of the body portion from a measured value of the size of the body portion in the photographic image, based on a ratio between the known size of the product and the size of the product in the photographic image.

The device may further comprise a determination unit that determines a size of the commercial product based on an estimated value of the actual size of the body portion.

The device may further comprise a verification unit that determines the appropriateness of the size of the commercial product determined by the determination unit, based on a user's profile.

The image acquisition unit acquires a photographic image showing a hand along with the product of a known size, the measurement unit measures a size of a joint of a finger for a ring in the photographic image, the estimation unit estimates an actual size of the joint of the finger for the ring from a measured value of the size of the joint of the finger for the ring in the photographic image, based on a ratio between the known size of the product and the size of the product in the photographic image, and the determination may determine a ring size based on the estimated value of the actual size of the joint of the finger for the ring.

The photographic image showing a hand along with the product of a known size acquired by the image acquisition unit may be a photographic image taken with a flashlight and a photographic image taken without a flashlight. The device may further comprise a background removal unit that uses the image taken with a flashlight and the image taken without a flashlight to perform a filtering process of removing the background from the photographic image showing the hand.

The verification unit may adjust the ring size determined based on the estimated value of the actual size of the joint of the finger for the ring, based on information attached to the photographic image.

The image acquisition unit may acquire a photographic image showing a foot along with the product of a known size, the measurement unit may measure a foot width, a foot length, and a circumferential length of the foot in the photographic image, the estimation unit estimates an actual foot width, foot length, and circumferential length of the foot from measured values of the foot width, foot length, and circumferential length of the foot in the image, based on a ratio between the known size of the product and the size of the product in the photographic image, and the determination may determine a size of shoes based on estimated values of the actual foot width, foot length, and circumferential length of the foot.

The photographic image showing a foot along with the product of a known size acquired by the image acquisition unit may be an image of the foot taken from above and an image of the foot taken from side.

The image acquisition unit may acquires a photographic image showing the upper body along with the product of a known size, the measurement unit may measure a shoulder width, a chest circumference, and a waist circumference in the photographic image, the estimation unit may estimate an actual shoulder width, chest circumference, and waist circumference from measured values of the shoulder width, chest circumference, and waist circumference in the photographic image, based on a ratio between the known size of the product and the size of the product in the photographic image, and the determination may determine a size of a shirt based on an estimated value of the actual shoulder width, chest circumference, and waist circumference.

The photographic image showing the upper body along with the product of a known size acquired by the image acquisition unit may be an image of the upper body taken from front and an image of the upper body taken from side.

Another embodiment of the present invention relates to a commercial product size determination method. The method comprises acquiring a photographic image showing a commercial product of a known size and a body portion that should wear the commercial product; detecting a size of the product in the photographic image; measuring a size of the body portion in the photographic image; and estimating an actual size of the body portion from a measured value of the size of the body portion in the photographic image, based on a ratio between the known size of the product and the size of the product in the photographic image.

According to the present invention, it is possible to determine the size of a commercial product worn on the body of a user.

Embodiments will now be described, by way of example only, with reference to the accompanying drawings which are meant to be exemplary, not limiting, and wherein like elements are numbered alike in several Figures, in which:
Fig. 1A is a perspective view of a ring-type wearable terminal, and
Fig. 1B is a perspective view of a communication unit built in the ring-type wearable terminal of Fig. 1A;
Fig. 2 shows how the user wearing the ring-type wearable terminal of Fig. 1A uses a reader terminal;
Fig. 3A shows an image taken when a card is placed on the hand;
Fig. 3B shows another image taken when a card is placed on the hand;
Fig. 3C shows an still another image taken when a card is placed on the hand;
Fig. 4A shows the joints of the fingers detected in the image taken when the card is placed on the hand;
Fig. 4B shows the joints of the fingers detected from another image taken when the card is placed on the hand;
Fig. 5 shows the actual size of the card;
Fig. 6A shows an image of the distorted quadrangular card, and Fig. 6B shows an image of the rectangular card subjected to projective transform;
Fig. 7 shows features of a ring size determination device according to the embodiment;
Fig. 8 is a flowchart showing a procedure for determining the ring size in the ring size determination device of Fig. 7;
Fig. 9A shows an image of a foot taken from above with the card being placed besides the foot;
Fig. 9B shows an image of a foot taken from side with the card being placed besides the foot;
Figs. 10A and 10b show a method of measuring the size of the foot;
Fig. 11A shows a measured value of the foot width and a measured value of the foot length detected in the photographic image of Fig. 9A;
Fig. 11B shows a measured value of the circumferential length of the foot and a measured value of the height of the top of the foot detected in the photographic image of Fig. 9B;
Fig. 12A shows an image of the upper body of the user holding the card in hand taken from front; and
Fig. 12B shows an image of the upper body of the user holding the card in hand taken from side.

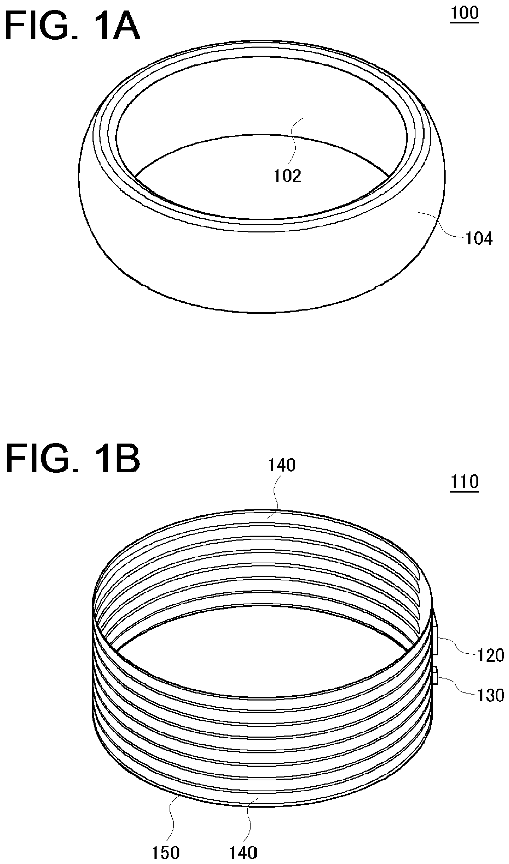

Fig. 1A is a perspective view of a ring-type wearable terminal 100. The ring-type wearable terminal 100 is provided with a first ring 102 and a second ring 104 joined to the first ring 102 from outside.

Fig. 1B is a perspective view of a communication unit 110 built in the ring-type wearable terminal 100 of Fig. 1A. The communication unit 110 is an IC tag including an IC chip and antennas. The communication unit 110 includes a flexible substrate 150 formed with antennas 140 on both surfaces, and an IC chip 120 provided on the flexible substrate 150. The flexible substrate 150 is shaped in a ring with the ends being joined to each other. The antennas 140 formed on both surfaces of the flexible substrate 150 are connected via a through hole formed in the substrate so as to constitute a loop antenna when the flexible substrate150 is shaped in a ring. The IC chip 120 includes a CPU, a memory, a receiver unit, and a transmitter unit, and is connected to an antenna terminal 130 provided at an end of the antennas 140. The IC chip 120 is operated according to a well-known art, using the power generated by the antenna 140 that receive radio waves from a reader and writer, and transmits and and receives data to and from the reader and writer.

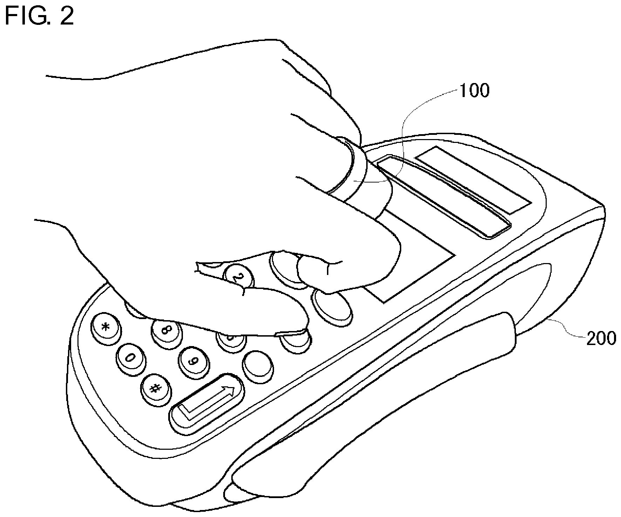

Fig. 2 shows how the user wearing the ring-type wearable terminal 100 uses a reader terminal 200. By orienting the ring-type wearable terminal 100 toward the reader unit of the reader terminal 200, the IC chip 120 of the ring-type wearable terminal 100 is driven by radio waves received from the reader terminal 200 and transmits and receives data to and from the reader terminal 200. The enabler user authentication or online payment.

If the size of the ring-type wearable terminal 100 does not suit the size of the user's finger, the ring-type wearable terminal 100 may slip off the finger or, conversely, is worn too tightly. While it is necessary to use the ring-type wearable terminal 100 exactly suited to the size of the user's finger, the user does not necessarily known the ring size suited to the user's finger. If the ring-type wearable terminal 100 is sold to the user face to face, the user may try the ring-type wearable terminal 100 of various sizes on at a shop. However, the user cannot try on the ring-type wearable terminal 100 on the Internet or in mail order services such as those using magazines. To address this, the embodiment provides a ring size determination device 400 capable of determining the user's ring size from a photographic image of the user's hand.

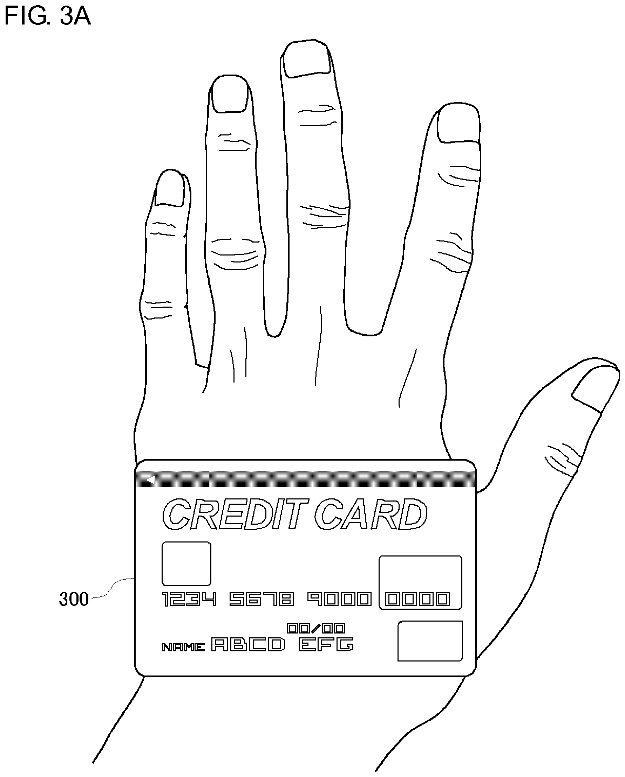

Fig. 3A shows an image taken when a card 300 is placed on the hand. The description here is directed to an image taken when the card 300 is placed on the back of hand, but an image taken when the card 300 is placed on the palm of the hand may alternatively be used.

The card 300 of a known size such as a credit card and a debit card is placed on the back of the user's hand and an image of the back of the user's hand is taken by a digital camera, a camera provided in a mobile phone, etc. If the card 300 is imaged from immediately above, the card 300 is captured as an undistorted rectangle as shown in the figure. The size of the card 300 is known so that the size of the finger of the user's hand in the image can be transformed into the actual size of the finger of the user's hand according to a ratio between the size of the card 300 in the image and the actual size of the card 300.

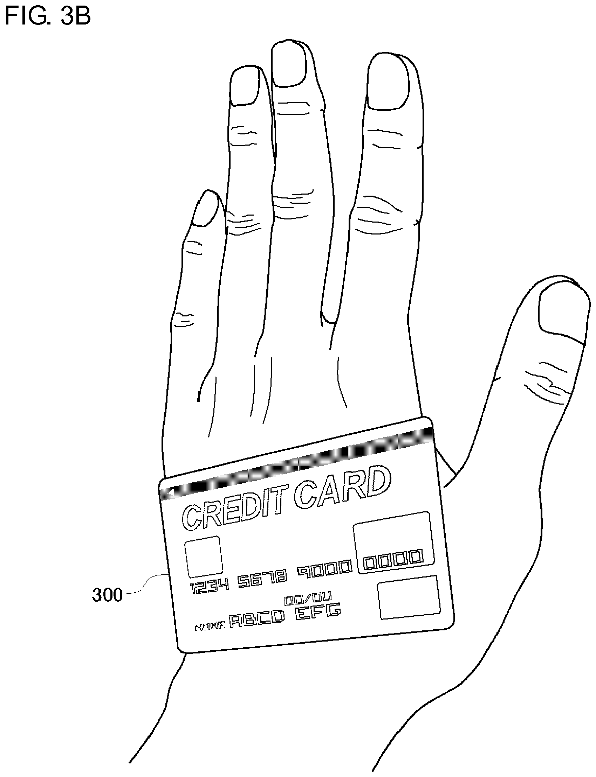

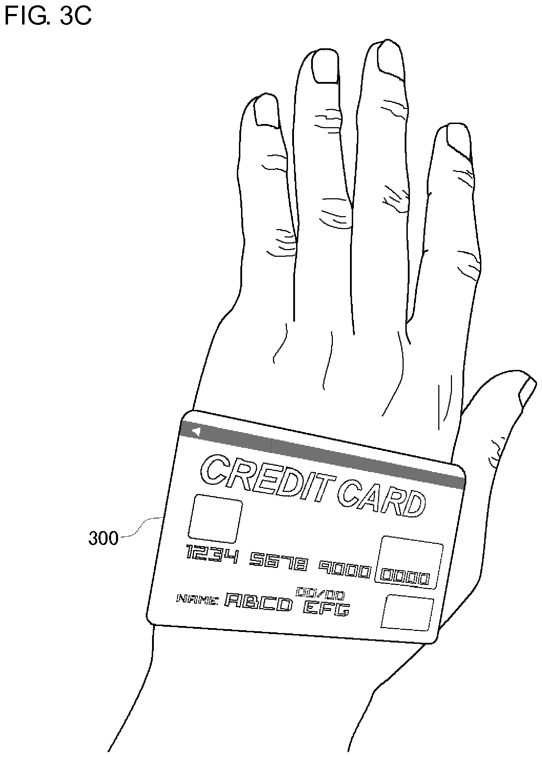

However, it is difficult to capture an image of the card 300 placed on the back of the hand from immediately above. For example, the card 300 may be imaged from diagonally right as shown in Fig. 3B or the card 300 may be imaged from diagonally left as shown in Fig. 3C. In this case, the card 300 is captured as a distorted quadrangle and not as a rectangle. In this case, it is necessary to perform projective transform for correcting the distortion of the card 300 in the image before and then to transform the size of the finger of the user's hand in the image into the actual size of the finger of the user's hand according to the ratio between the size of the card 300 in the image to the actual size of the card 300.

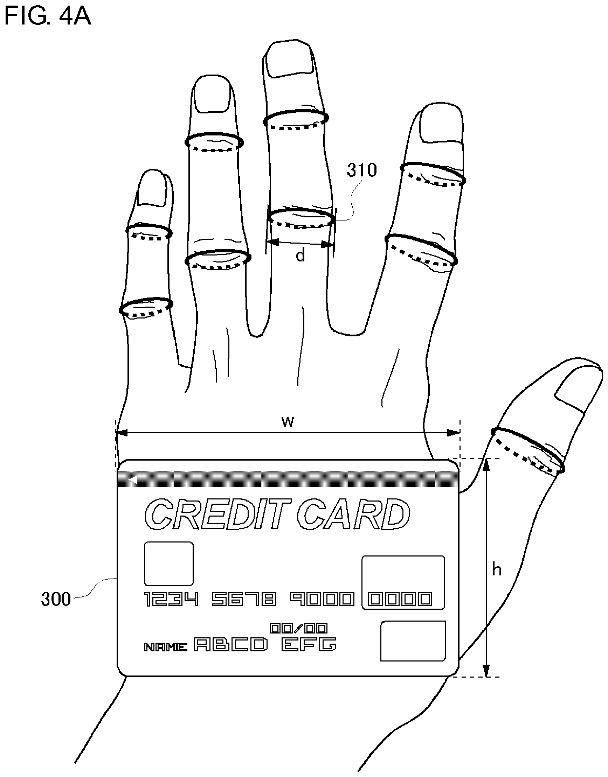

Fig. 4A shows the joints of the fingers detected in the image taken when the card 300 is placed on the hand. The figure shows an image of the card 300 taken from immediately above. The card 300 is captured in the image as an undistorted rectangle. An area of the card 300 is extracted from the photographic image and the width w and the height h of the card 300 in the image are measured in terms of the number of pixels.

Further, the five fingers of the hand are identified by extracting the feature of the human hand from the photographic image of Fig. 4A. Still further, the joints of the fingers are identified by extracting the feature of human fingers in the identified fingers. In this way, the first joint of the thumb is identified, and the first and second joints of each of the remaining four fingers are identified.

If the ring-type wearable terminal 100 is worn on the middle finger, the suitable size of the ring-type wearable terminal 100 is determined by the size of the second joint 310 of the middle finger. The size of joint of a finger is the maximum width of the joint of the finger identified when the finger is viewed from immediately above. Normally, a finger is elliptical in shape, and the width of the finger as viewed from immediately above is larger than the thickness of the finger so that the width of the finger substantially determines the suitable size of the ring. The ring-type wearable terminal 100 having a diameter corresponding to the size of the second joint 310 of the middle finger suits the user's finger. The size d of the second joint 310 of the middle finger in the image is measured in the photographic image of Fig. 4A in terms of the number of pixels.

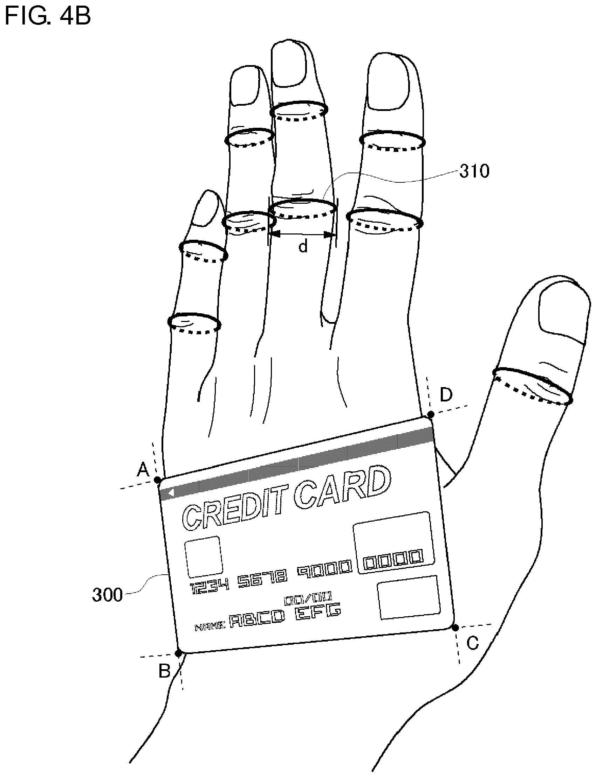

Fig. 4B shows the joints of the fingers detected from another image taken when the card 300 is placed on the hand. The figure shows an image of the card 300 taken from diagonally right, and the card 300 is captured as a distorted quadrangle. The area of the card 300 is extracted from the photographic image and the coordinate values of the four vertexes A, B, C, and D of the quadrangle of the card 300 are detected.

As in the case of Fig. 4A, the five fingers of the hand are identified and the joints of the fingers are identified in the photographic image of Fig. 4B. The size d of the second joint 310 of the middle finger wearing the ring-type wearable terminal 100 is measured in the photographic image of Fig. 4B in terms of the number of pixels.

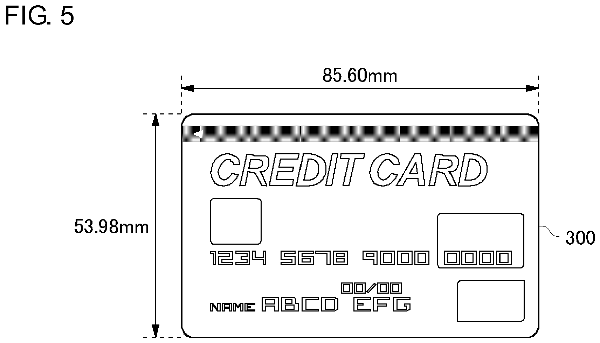

Fig. 5 shows the actual size of the card 300. The size of the card 300 such as a credit card and a debit card is defined in the international standard. The width W is 53.98 mm and the height H is 85.60 mm.

If the case of an image of the card 300 taken from immediately above as shown in Fig. 4A, an actual size D=r*d of the second joint 310 of the middle finger can be determined by determining a ratio r=W/w between a measured value w of the width of the card 300 in the image and the actual width W, and multiplying the size d of the second joint 310 of the middle finger in the image by the ratio r. The actual size D of the second joint 310 of the middle finger can be alternatively determined by determining a ratio r=H/h between the measured value h of the height of the card 300 in the image and the actual width H, and multiplying the radio by the size d of the second joint 310 of the middle finger in the image. By using the measured values of both the width and height of the card 300 in the image, measurement errors can be reduced and the actual size D of the second joint 310 of the middle finger can be determined more accurately.

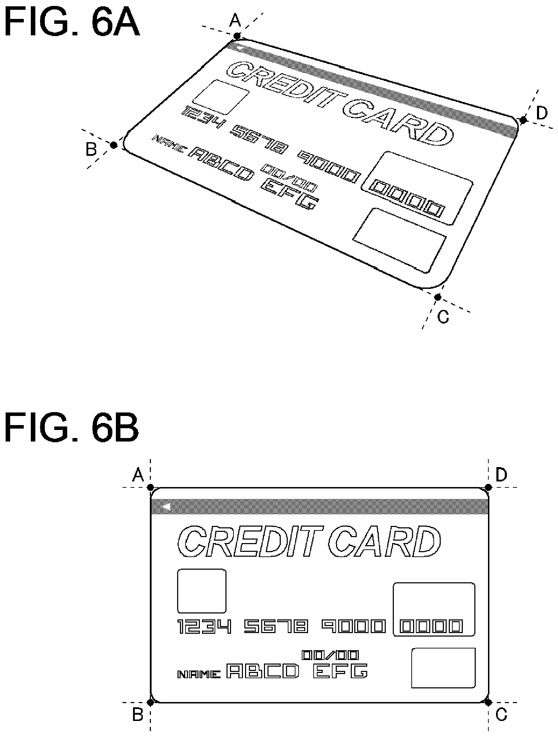

In the case of the image of the card 300 taken from diagonally right as shown in Fig. 4B, the card 300 is a distorted quadrangle so that projective transformation for correcting it into a rectangle is necessary. Fig. 6A shows an image of the distorted quadrangular card 300, and Fig. 6B shows an image of the rectangular card 300 subjected to projective transform. Projective transform H for correcting the distorted quadrangle to the rectangle maps the coordinate values of the four vertexes A, B, C, and D of the distorted quadrangular card 300 of Fig. 6A to the coordinate values of the four vertexes A, B, C, and D of the rectangular card 300 of Fig. 6B. The width w' and the height h' of the rectangular card 300 subjected to projective transform are determined.

The projective transform H applied to the distorted card 300 of Fig. 4B is also applied to the second joint 310 of the middle finger of Fig. 4B. This transforms the image of the second joint 310 of the middle finger of Fig. 4B into an image taken from immediately above as shown in Fig. 4A. The size d' of the second joint 310 in the image of the second joint 310 subjected to projective transform is measured. Projective transform H corrects the size d of the second joint 310 in the original photographic image to d'.

The actual size D=r'*d' of the second joint 310 of the middle finger can be determined by determining a ratio r'=W'/w' between the measured value w' of the width of the card 300 in the image subjected to projective transform and the actual width W, and multiplying the size d' of the second joint 310 of the middle finger in the image subjected to projective transform by the ratio r'. The actual size D of the second joint 310 of the middle finger can be alternatively determined by determining a ratio r'=H/h' between the measured value h' of the height of the card 300 in the image subjected to projective transform and the actual width H, and multiplying the radio by the size d' of the second joint 310 of the middle finger in the image subjected to projective transform. By using the measured values of both the width and height of the card 300 in the image subjected to projective transform, measurement errors can be reduced and the actual size D of the second joint 310 of the middle finger can be determined more accurately.

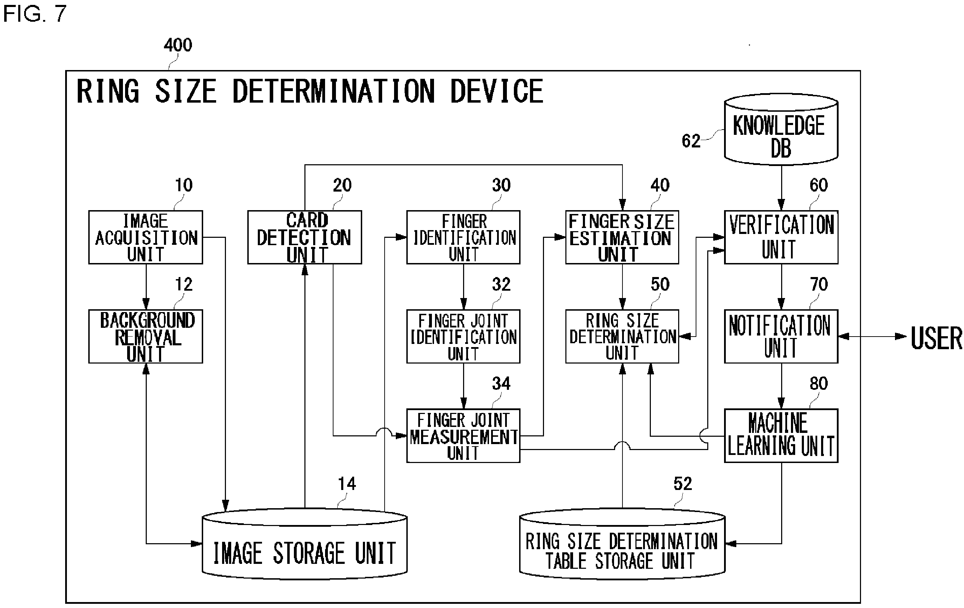

Fig. 7 shows features of a ring size determination device 400 according to the embodiment.

An image acquisition unit 10 acquires a photographic image of the hand on which the card 300 is placed. The photographic image is transmitted from, for example, a user's terminal via a network. The image acquisition unit 10 acquires two photographic images including a photographic image taken with a flashlight and a photographic image taken without a flashlight and stores the images in an image storage unit 14.

A background removal unit 12 uses the photographic image taken with a flashlight and the photographic image taken without a flashlight stored in the image storage unit 14, removes the background, extracts imaging areas of the hand and the card 300, and stores the extracted images of the imaging areas showing the hand and the card 300 in the image storage unit 14.

A card detection unit 20 extracts an area of the card 300 from the image of the imaging area showing the hand and the card 300 stored in the image storage unit 14 and detects the size of the card 300 in the image. If the area of the card 300 is a distorted quadrangle, the card detection unit 20 subjects the image to projective transform for transforming the shape of the card 300 into a rectangle before detecting the size of the card 300 in the image. The card detection unit 20 supplies the detected size of the card 300 to a finger size estimation unit 40.

A finger identification unit 30 identifies the five fingers of the hand from the image of the imaging area showing the hand the card 300 and stores in the image storage unit 14 and identifies the finger to wear the ring-type wearable terminal 100 (hereinafter, referred to as "the finger for the ring"). The user designates which finger should wear the ring-type wearable terminal 100. The finger identification unit 30 communicates the area of the designated finger for the ring to a finger joint identification unit 32.

The finger joint identification unit 32 identifies the joints in the area of the finger for the ring and identifies the second joint. The finger joint identification unit 32 communicates the position of the second joint thus identified to a finger joint measurement unit 34.

The finger joint measurement unit 34 measures the size of the second joint of the finger for the ring in the image. If the area of the card 300 is a distorted quadrangle, the finger joint measurement unit 24 subjects the area of the second joint of the finger for the ring (or the image of the hand as a whole) to the same projective transform used to transform the shape of the card 300 into a rectangle, before measuring the size of the second joint of the finger for the ring in the image. The finger joint measurement unit 34 supplies the measured value of the size of the second joint of the finger for the ring in the image to the finger size estimation unit 40.

The finger size estimation unit 40 estimates the actual size of the second joint of the finger for the ring from the measured value of the size of the second joint of the finger for the ring measured by the finger joint identification unit 32, based on the ratio between the known size of the card 300 and the size of the card 300 in the image detected by the card detection unit 20. The finger size estimation unit 40 supplies the estimated value of the actual size of the second joint of the finger for the ring to a ring size determination unit 50.

The ring size determination unit 50 determines the ring size corresponding to the estimated value of the actual size of the second joint of the finger for the ring based on a ring size determination table stored in a ring size determination table storage unit 52 and supplies the determined ring size to a verification unit 60. For example, if the estimated value of the actual size of the second joint of the finger for the ring is 20 mm, the ring size determination unit 50 selects size 10.5 of the U.S. standard and size 22 of the Japanese standard.

The ring size determination unit 50 may determine the ring size from the estimated value of the actual size of the second joint of the finger for the ring according to a method not using machine learning and a method using machine learning.

First, a method of determination not using machine learning will be described. A test is run to learn the ring size corresponding to the size of the second joint of the finger for the ring. Data that assigns recommended values of the ring size to sizes of the second joint of the finger for the ring is generated manually. The data is applied to the determination algorithm. The size of the second joint of the finger for the ring is detected from the photographic image. The recommended value of the ring size corresponding to the estimated value of the size of the second joint is determined based on the determination algorithm. A recommendation for purchase of a ring of that ring size is made to the user. Feedback relating to whether the ring size is suitable is received from the user who purchased the ring. If the user feels that the ring is loose, the recommended ring size is changed to a size one step smaller. If the user feels that the ring is tight, the recommended ring size is changed to a size one step larger.

A method will now be given of a method of determination using machine learning. The size of the second joint of the finger for the ring is detected from the photographic image. The recommended value of the ring size corresponding to the estimated value of the size of the second joint is determined based on the determination algorithm. A recommendation for purchase of a ring of that ring size is made to the user. Feedback relating to whether the ring size is suitable is received from the user who purchased the ring and the determination algorithm improves the recommended value of the ring size automatically. For example, if the determination algorithm determined that the ring size for the user is size 14 and the proper ring size turns out to be size 15, the determination algorithm learns such that the probability of recommending size 15 is increased. The more feedbacks are obtained from users who purchased the ring, the more the precision of determination by the determination algorithm is improved by machine learning.

Alternatively, the correspondence between the estimated value of the size of the second joint of the finger for the ring (or the image of the user's finger itself) and the proper ring size may be learned through deep learning. The precision of learning through deep learning can be further improved by reflecting feedbacks from users who purchased the ring relating to whether the ring size is suitable.

The verification unit 60 determines whether the ring size determined based on the knowledge relating to the feature of human fingers stored in a knowledge database 62 is appropriate. In case an average ring size is known from the profile such as sex, age, nationality, etc. of users, for example, the verification unit 60 determines that the result of determination by the ring size determination unit 50 is not appropriate if the ring size determined by the ring size determination unit 50 is deviated significantly from the average ring size.

The finger joint measurement unit 34 may measure the sizes of the joints of the fingers of the hand in the photographic image, and the verification unit 60 may determine the appropriateness of the measured value of the size of the second joint of the finger for the ring in the image, based on the rule relating the relative sizes of the joints of the fingers of human beings stored in the knowledge database 62. For example, if the measured value of the size of the second joint of the finger for the ring is smaller than the measured value of the size of the first joint of the same finger, it is determined that the measured value of the size of the second joint of the finger for the ring is not appropriate.

The verification unit 60 may determine the appropriateness of the ring size based on information attached to the photographic image. The information attached to the photographic image includes the date/time when the image was taken, the location where the image was taken, etc. Information such as humidity, temperature, etc. identified from the date/time and the location shall be included in the information attached to the photographic image. The user's finger may vary in size in the morning and at night. A finger may be thin in the morning and grows thick at night due to, for example, swelling. If the image is taken at night, the verification unit 60 may direct the ring size determination unit 50 to adjust the ring size determined from the size of the second joint of the finger for the ring estimated from the photographic image to a size one step smaller. Further, the size of a finger may vary slightly due to the impact from the temperature, humidity, etc. The ring size may be adjusted based on information relating to the weather identified from the information attached to the photographic image.

If the verification unit 60 verifies that the determined ring size is appropriate, a notification unit 70 transmits the determined ring size to a user terminal so as to notify the user. The user purchases the ring-type wearable terminal 100 of the determined ring size.

The notification unit 70 receives feedback form the user who purchases the ring-type wearable terminal 100 as to how the ring-type wearable terminal 100 fits. The machine learning unit 80 adjusts a parameter for determination of the ring size in the ring size determination unit 50 or updates the ring size determination table stored in the ring size determination table storage unit 52, based on the user's feedback claiming that the size of the ring-type wearable terminal 100 is tight, loose, etc.

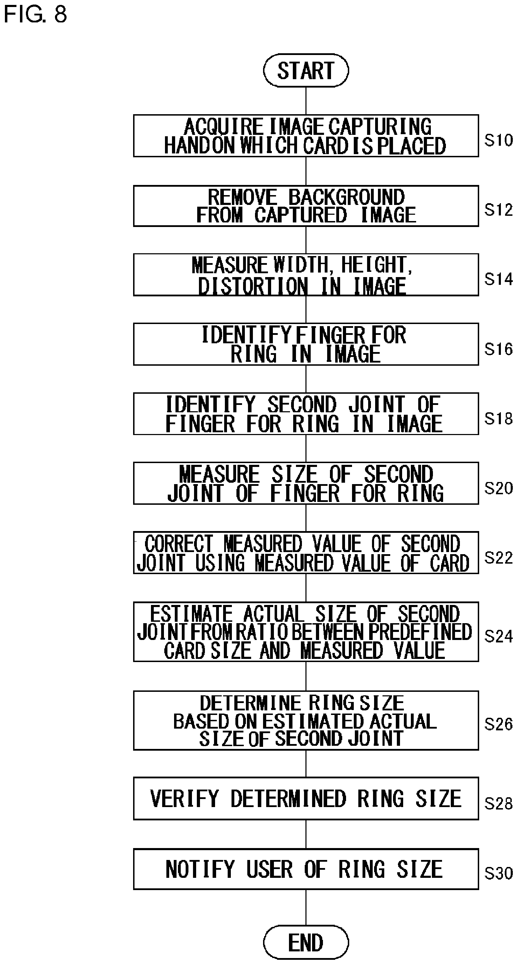

Fig. 8 is a flowchart showing a procedure for determining the ring size in the ring size determination device 400.

The image acquisition unit 10 acquires a photographic image of the user's hand on which the card 300 is placed (S10). It is preferable that two photographic images are available. Preferably, one image taken with a flashlight and one image taken without a flashlight shall be made available to distinguish between the background and the hand.

The background removal unit 12 performs a filtering process of removing the background from the photographic image of the user's hand (S12). The background removal unit 12 distinguishes between the user's hand and the background from a feature such as a difference between the color of the user's hand and the color of the background. If a photographic image taken without a flashlight and a photographic image taken with a flashlight are available, the user's hand and the background can be distinguished from each other more accurately by referring to reflection of a flashlight or absence thereof.

The card detection unit 20 extracts an area of the card 300 from the photographic image of the user's hand and measures the width, height, and distortion of the card 300 (S14). If the shape of the card 300 detected is a distorted quadrangle, the card detection unit 20 projectively transforming the card to a rectangle before measuring the width and height of the card 300 in terms of the number of pixels.

The finger identification unit 30 identifies in the photographic image the finger for the ring on which the user expects to wear the ring-type wearable terminal 100 (S16). The finger joint identification unit 32 identifies the second joint of the finger for the ring (S18).

The finger joint measurement unit 34 measures the size of the second joint of the finger for the ring in the image (S20). If the card 300 is shaped in a distorted quadrangle, the finger joint measurement unit 34 corrects the measured value of the size of the second joint by subjecting the image of the second joint of the finger for the ring (or the image of the hand as a whole) to the same projective transform before measuring the size of the second joint of the finger for the ring in the image (S22).

The finger size estimation unit 40 estimates the actual size of the second joint of the finger for the ring based on the ratio between the predefined size of the card 300 and the measured value of the size in the image (S24).

The ring size determination unit 50 determines the ring size based on the actual size of the second joint of the finger for the ring (S26).

The verification unit 60 verifies the appropriateness of the result of determining the ring size (S28). If the result of determining the ring size is appropriate, the notification unit 70 communicates the ring size to the user (S30).

The features and operation of the ring size determination device 400 has been described above by way of example of a commercial product size determination device. A similar technical idea can also be applied to determination of the size of commercial products other than rings that are worn on the body such as shoes, clothes, and hats. A similar method of determination may generally be used to determine the size of a body portion that should wear a commercial product, using a photographic image showing a product of a known size along with the body portion wearing the commercial product. A method of determining a commercial product size will be described by using several commercial products as examples.

First, a method of determining the size of shoes is described. In the case of shoes, it is necessary to determine the size of the user's foot accurately.

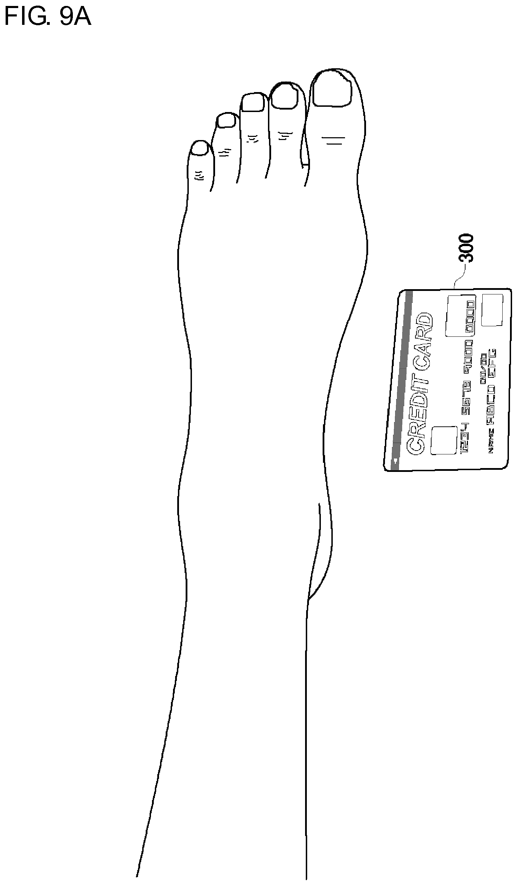

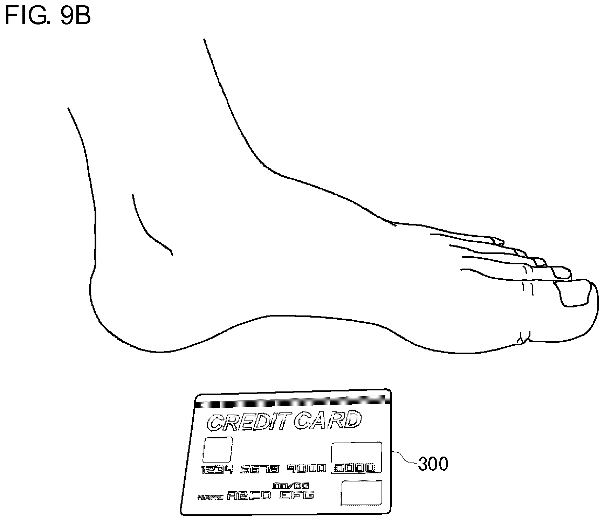

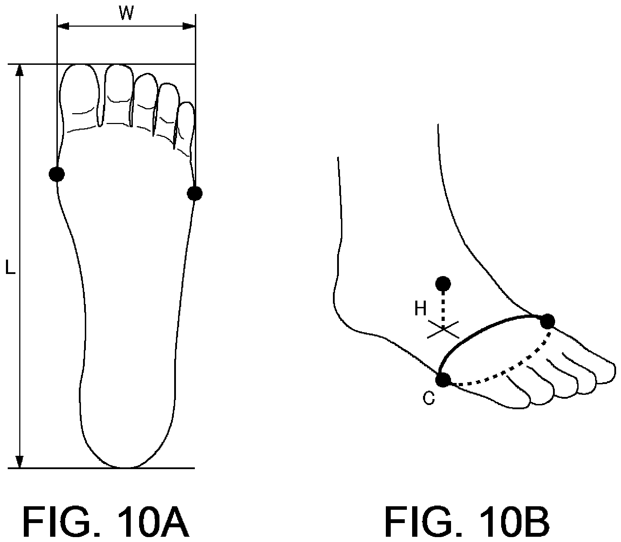

Fig. 9A shows an image of a foot taken from above with the card 300 being placed besides the foot, and Fig. 9B shows an image of a foot taken from side with the card 300 being placed besides the foot. Figs. 10A and 10b show a method of measuring the size of the foot.

In order to determine the size of shoes, it is necessary to measure a foot width W defined as a length on the bottom of the foot between the root of the thumb and the root of the little finger, and a foot length L defined as a length of the foot in the longitudinal direction, as shown in Fig. 10A, and to measure a circumferential length C of the foot defined as a length encircling the foot through the root of the thumb and the root of the little finger, as shown in Fig. 10B. The height H of the top of the foot may also be measured. The foot width W and the foot length L can be estimated from the image of the foot taken from above as shown in Fig. 9A. The circumferential length C and the height H can be estimated from the image of the foot taken from side as shown in Fig. 9B.

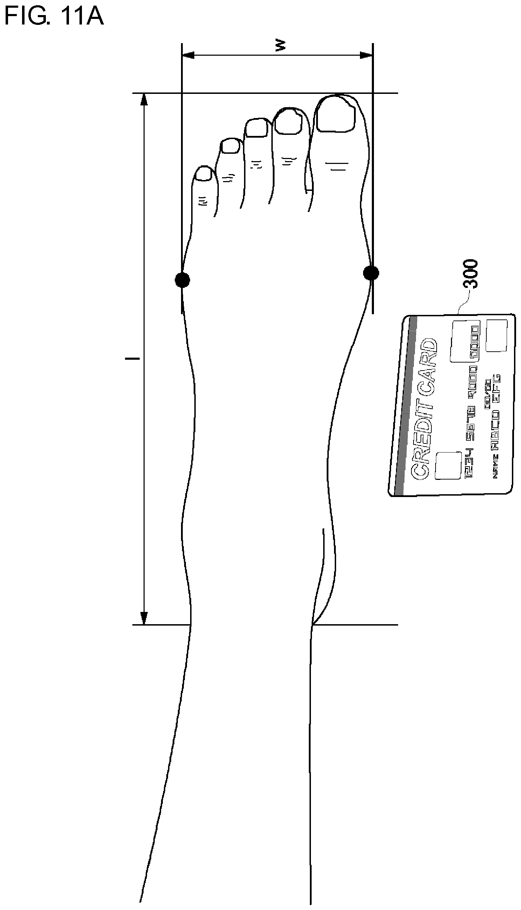

Fig. 11A shows a measured value w of the foot width and a measured value l of the foot length detected in the photographic image of Fig. 9A. If the image of the card 300 is distorted, the image is subject to projective transform H for correcting a distorted quadrangle into a rectangle before obtaining a measured value w' of the foot width and a measured value l' of the foot length. By determining a ratio r' with which to transform the size of the card 300 in the image into the actual size and multiplying the ratio by the measured value w' of the foot width and the measured value l' of the foot length in the image subjected to projective transform, the estimated value W=r'*w' of the actual foot width and the estimated value L=r'*l' of the actual foot length can be determined.

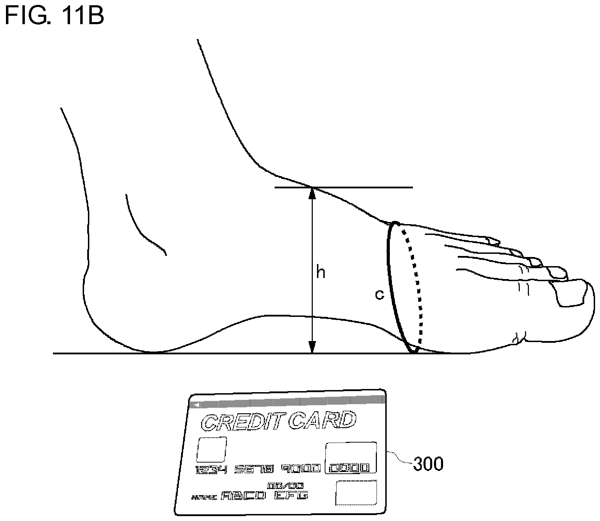

Fig. 11B shows a measured value c of the circumferential length c of the foot and a measured value h of the height of the top of the foot detected in the photographic image of Fig. 9B. If the image of the card 300 is distorted, the image is subject to projective transform H for correcting a distorted quadrangle into a rectangle before obtaining a measured value c' of the circumferential length of the foot and a measured value h' of the height of the top of the foot. By determining a ratio r' with which to transform the size of the card 300 in the image into the actual size and multiplying the ratio by the measured value c' of the circumferential length of the foot and the measured value h' of the height of the top of the foot in the image subjected to projective transform, the estimated value C=r'*c' of the actual circumferential length of the foot and the estimated value H=r'*h' of the actual height of the top of the foot can be determined.

The size of shoes suited to the user's foot is determined from the estimated value W of the foot width, the estimated value L of the foot length, and the estimated value C of the circumferential length of the foot. Optionally, the size of shoes may be determined by further using the estimated value H of the height of the top of the foot.

A description will now be given of a method of determining the size of a shirt. In the case of a shirt, it is necessary to determine the size of the user's upper body accurately.

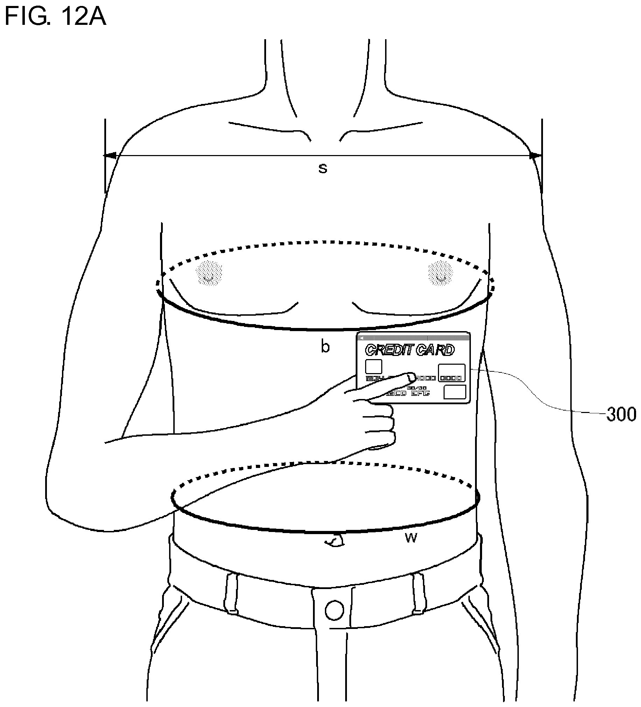

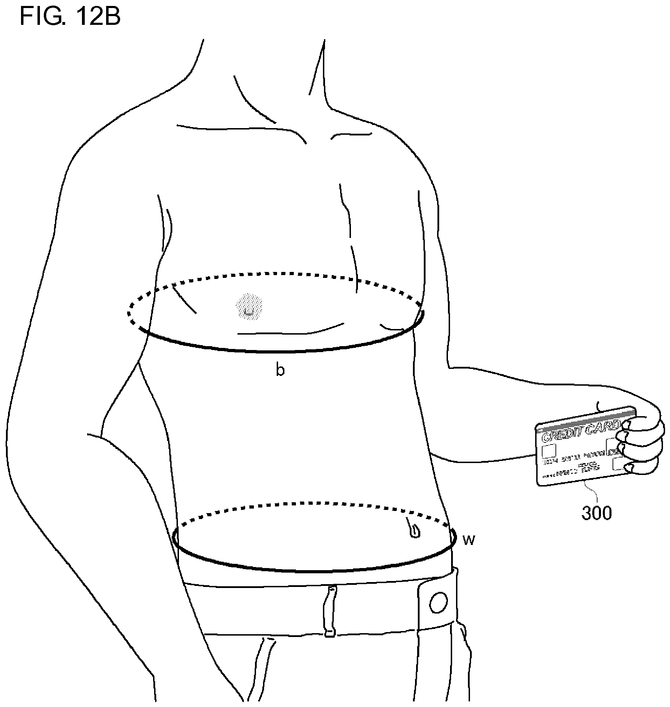

Fig. 12A shows an image of the upper body of the user holding the card 300 in hand taken from front, and Fig. 12B shows an image of the upper body of the user holding the card 300 in hand taken from side.

In order to determine the size of a shift, it is necessary to measure a shoulder width S, a chest circumference B, and a waist circumference W. The shoulder width S can be estimated from the image of Fig. 12A of the upper body taken from front. The chest circumference B and the waist circumference W can be estimated by combining the image of Fig. 12A of the upper body taken from front and the image of Fig. 12B of the upper boy taken from side.

A measured value s of the shoulder width in the image is obtained from the front image of Fig. 12A of the upper body. If the image of the card 300 is distorted, the image is subject to projective transform H for correcting a distorted quadrangle into a rectangle before obtaining the measured value s' of the shoulder width. By determining a ratio r' with which to transform the size of the card 300 in the image into the actual size and multiplying the ratio by the measured value s' of the shoulder width in the image subjected to projective transform, an estimated value S=r'*s' of the actual shoulder width can be determined.

A measured value b of the chest circumference in the image and a measured value w of the waist circumference in the image are measured in the front image of Fig. 12A of the upper body and the side image of Fig. 12B of the upper body. If the image of the card 300 is distorted, the image is subject to projective transform H for correcting a distorted quadrangle into a rectangle before obtaining a measured value b' of the chest circumference and a measured value w' of the waist circumference. By determining a ratio r' with which to transform the size of the card 300 in the image into the actual size and multiplying the ratio by the measured value b' of the chest circumference and the measured value w' of the waist circumference in the image subjected to projective transform, an estimated value B=r'*b' of the actual chest circumference and an estimated value W=r'*w' of the actual waist circumference can be determined.

The size of a shirt suited to the user's upper body is determined from the estimated value S of the shoulder width, the estimated value B of the chest circumference, and the estimated value W of the waist circumference.

To determine the size of a hat, the length of the circumference of the user's head, etc. are similarly estimated to determine the suitable size of the hat, using images of the user's head and the card 300 taken from front and from side.

Described above is an explanation based on an exemplary embodiment. The embodiment is intended to be illustrative only and it will be obvious to those skilled in the art that various modifications to constituting elements and processes could be developed and that such modifications are also within the scope of the present invention.

It the above description, the size of the joint of the finger is detected by using a photographic image of the back of the hand on which the card 300 is placed. Alternatively, the size of the joint of the finger may be detected by using a photographic image of the palm of the hand on which the card is placed. Any object other than the card 300 having a known shape and size may be placed on the hand and imaged. By measuring the size of the product having a known size and using it for comparison, the size of the joint of the finger can be determined. For example, a banknote or a coin may be placed on the hand. In the case of a coin, the image may be subject to projective transform that transforms an elliptically distorted shape of the coin in the photographic image into the original circular shape.

## Claims

1. A commercial product size determination device comprising:
an image acquisition unit (10) that acquires a photographic image showing a commercial product of a known size and a body portion that should wear the commercial product;
a detection unit (20) that detects a size of the product in the photographic image;
a measurement unit (34) that measures a size of the body portion in the photographic image; and
an estimation unit (40) that estimates an actual size of the body portion from a measured value of the size of the body portion in the photographic image, based on a ratio between the known size of the product and the size of the product in the photographic image.

2. The commercial size determination device according to claim 1, wherein
the detection unit (20) detects the size of the product in the photographic image by performing projective transform that transforms a shape of the product in the photographic image into an original shape, and
the measurement unit (34) subjects the photographic image to the projective transform before measuring the size of the body portion in the photographic image.

3. The commercial product size determination device according to claim 1 or 2, further comprising:
a determination unit (50) that determines a size of the commercial product based on an estimated value of the actual size of the body portion.

4. The commercial product size determination device according to claim 3, wherein
the determination unit (50) adjusts the size of the commercial product determined based on the estimated value of the actual size of the body portion, based on feedback from a user relating to appropriateness of the size of the commercial product as determined.

5. The commercial product size determination device according to one of claims 1 through 4, wherein
the image acquisition unit (10) acquires a photographic image showing a hand along with the product of a known size,
the measurement unit (34) measures a size of a joint of a finger for a ring in the photographic image, and
the estimation unit (40) estimates an actual size of the joint of the finger for the ring from a measured value of the size of the joint of the finger for the ring in the photographic image, based on a ratio between the known size of the product and the size of the product in the photographic image.

6. A commercial product size determination method, comprising:
acquiring a photographic image showing a commercial product of a known size and a body portion that should wear the commercial product;
detecting a size of the product in the photographic image;
measuring a size of the body portion in the photographic image; and
estimating an actual size of the body portion from a measured value of the size of the body portion in the photographic image, based on a ratio between the known size of the product and the size of the product in the photographic image.

7. A commercial product size determination program embedded in a computer readable medium, the program comprising:
a module that acquiring a photographic image showing a commercial product of a known size and a body portion that should wear the commercial product;
detecting a size of the product in the photographic image;
measuring a size of the body portion in the photographic image; and
estimating an actual size of the body portion from a measured value of the size of the body portion in the photographic image, based on a ratio between the known size of the product and the size of the product in the photographic image.
